# FASCICULE DE BREVET EUROPEEN

(11) **EP 0 465 292 B1**
(45) Date de publication et mention de la délivrance du brevet: **10.05.1995**
(21) Numéro de dépôt: 91401660.5
(22) Date de dépôt: 19.06.1991
(51) Int. Cl.: F16H 1/32, B60J 7/057, F16H 21/14

(54) **Motoréducteur d'entraînement de pièces telles que des accessoires de véhicules automobiles, notamment un toît ouvrant**
Getriebemotoreinrichtung zum Antrieb eines Fahrzeugzubehörs, insbesondere für Kraftfahrzeugschiebedach
Reduction motor device for driving a vehicle accessory, particularly for a sliding roof

(30) Priorité: 06.07.1990 FR 9008634
(43) Date de publication de la demande: 08.01.1992
(73) Titulaire: ROCKWELL BODY AND CHASSIS SYSTEMS - FRANCE, en abrégé: ROCKWELL BCS - FRANCE, 92082 Paris La Défense 2 (FR)
(72) Inventeur: Periou, Pierre, F-95000 Cergy Pontoise (FR); Bardet, Francois, F-6300 Clermont Ferrand (FR)
(74) Mandataire: Martin, Jean-Paul

(56) Documents cités:
- EP-A- 0 100 810
- FR-A- 2 214 841
- FR-A- 2 343 449
- FR-A- 2 455 221
- FR-A- 2 550 298
- GB-A- 603 503
- GB-A- 1 164 231
- US-A- 2 803 146

## Description

La présente invention a pour objet un motoréducteur d'entraînement de pièces telles que des accessoires de véhicules automobiles, par exemple un toit ouvrant, exigeant des couples importants dans un encombrement réduit.

Pour de telles applications, les systèmes classiques de réduction simple étage à roue et vis sans fin, ne permettent pas d'obtenir une réduction suffisante, ni une résistance mécanique des dentures compatible avec un faible encombrement.

L'invention a donc pour but de réaliser un système motoréducteur capable de résister à des couples très élevés sous un faible encombrement.

Suivant l'invention, le motoréducteur est caractérisé par la combinaison définie dans la revendication 1. De GB-A- 603 503 est connu un motoréducteur comportant:
- un arbre de sortie du moteur entraînant un premier étage de réduction comportant deux roues dentées entraînées synchrones par un pignon,
- un axe fixé à chaque roue dentée et prolongé par un maneton, excentré par rapport à l'axe correspondant de manière à pouvoir exécuter des rotations autour de cet axe,
- un second étage de réduction comportant un élément, muni d'une denture, lié aux manetons de façon à être entraîné par ceux-ci durant la rotation des manetons suivant une translation circulaire dont le rayon est égal à l'excentration des manetons,
- un organe équipé d'un arbre de sortie pouvant être relié à la pièce à entraîner, portant une denture qui coopère avec celle dudit élément, les nombres de dents des dentures de l'élément et dudit organe étant différents de façon à provoquer une rotation de l'organe de raison déterminée par la différence des nombres de dents des deux dentures.

Le système de l'invention comprend deux étages de réduction : un premier étage à vis sans fin qui fournit une réduction élevée avec un bon rendement, et un second étage constitué par l'élément et l'organe précité équipés de dentures conjuguées, qui permet un nombre élevé de dents en prise, lui conférant une résistance mécanique suffisante à des efforts considérables dans un encombrement très réduit.

Suivant une première forme de réalisation de l'invention, ledit élément lié aux manetons présente deux paliers dans chacun desquels tourillonne un maneton, et ladite denture est ménagée intérieurement à cet élément, le nombre de dents de cette denture étant supérieur à celui de la denture de l'organe de sortie.

Selon un second mode de réalisation possible de l'invention, ledit élément lié aux manetons est une roue dentée dans laquelle tourillonnent les manetons, et l'organe de sortie est un anneau pourvu d'une denture intérieure entourant ladite roue dentée, cet anneau étant solidarisé en rotation avec l'arbre de sortie et sa denture ayant un nombre de dents supérieur à celui de la denture de la roue intérieure associée.

L'invention sera maintenant décrite en référence aux dessins annexés qui en illustrent deux formes de réalisation à titre d'exemples non limitatifs.

La figure 1 est une vue en perspective d'une première forme de réalisation du motoréducteur selon l'invention.

La figure 2 est une vue en perspective d'une seconde forme de réalisation du motoréducteur selon l'invention.

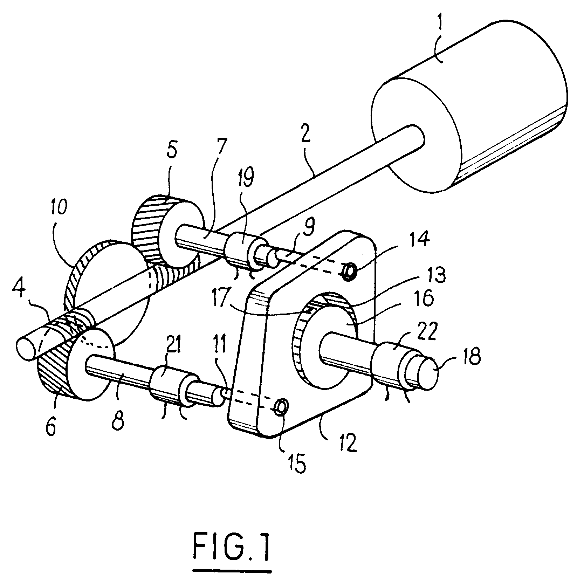

Le motoréducteur représenté à la Fig. 1 est destiné à l'entraînement de pièces non représentées, telles que des accessoires de véhicules automobiles, notamment un toit ouvrant.

Ce motoréducteur comprend un moteur électrique 1, relié à une source de courant continu non représentée (batterie),
- un arbre 2 de sortie du moteur 1, portant deux vis coaxiales 3 et 4, décalées axialement d'une distance appropriée et à pas de vis opposés,
- deux roues dentées 5, 6 placées de part et d'autre de l'arbre 2 et coopérant chacune avec une vis 3, 4,
- un axe 7, 8 fixé respectivement à chaque roue dentée 5, 6, orienté perpendiculairement à l'arbre 2 et prolongé par un maneton 9, 11, excentré par rapport à l'axe correspondant 7, 8, de manière à pouvoir exécuter des rotations autour de cet axe;
- un élément 12 muni d'une denture intérieure 13, constitué dans cet exemple par une plaque s'étendant dans un plan sensiblement perpendiculaire aux axes 7 et 8, et dans lequel sont ménagés des paliers 14, 15 où peuvent tourillonner les extrémités des manetons respectifs 9 et 11;
- et une roue terminale 16 engagée dans l'ouverture circulaire sur le pourtour de laquelle est ménagée la denture 13, cette roue 16 portant une denture 17 pouvant engrener avec la denture 13.

La roue terminale 16 supporte un arbre de sortie 18 relié à la pièce à entraîner. Les axes 7, 8 et l'arbre 18 tournent dans des paliers respectifs 19, 21, 22, et une roue dentée 10 intermédiaire, est disposée entre les deux roues dentées 5, 6 de manière à engrener à celles-ci pour assurer leur synchronisme.

La denture intérieure 13 de la plaque 12 comporte un nombre de dents Z3 supérieur au nombre de dents Z4 de la denture 17.

Le fonctionnement du système motoréducteur qui vient d'être décrit est le suivant.

Lorsque le moteur 1 tourne, les vis 3, 4 entraînent les roues dentées respectives 5, 6 dans le même sens de rotation compte tenu de l'inversion des filetages des vis 3, 4. De ce tait, les axes 7, 8 tournent dans le même sens, et les manetons correspondants 9, 11 exécutent une rotation dont le rayon est égal à l'excentration des manetons 9, 11 par rapport aux axes géométriques des axes 7, 8. D'autre part les deux manetons 9, 11 sont suffisamment distants l'un de l'autre pour imposer à la plaque 12 un mouvement de translation circulaire, dont le rayon est égal à l'excentration des manetons 9, 11, ce mouvement existant en tous points de la plaque 12.

Il en résulte une rotation de la roue 16 de raison (Z3 - Z4)/Z4 par rapport à la rotation des manetons excentriques 9, 11, avec un nombre de dents relativement élevé de la denture 17 en prise avec la denture 13.

L'avantage de cet agencement apparaît lorsque Z3 tend vers Z4 : on obtient alors une réduction importante, tout en augmentant le nombre de dents en prise mutuelle.

A titre d'exemple indicatif non limitatif, pour Z3=18 et Z4=17, on obtient une raison r=1/17, c'est-à-dire que pour chaque tour de la plaque 12, la roue 16 tourne d'une dent.

Il convient également de noter que l'engrenage 13, 17 peut être positionné indépendamment des autres éléments constitutifs du système (9, 11, 7, 8...), ce qui permet d'adapter le dispositif aux contraintes d'encombrement.

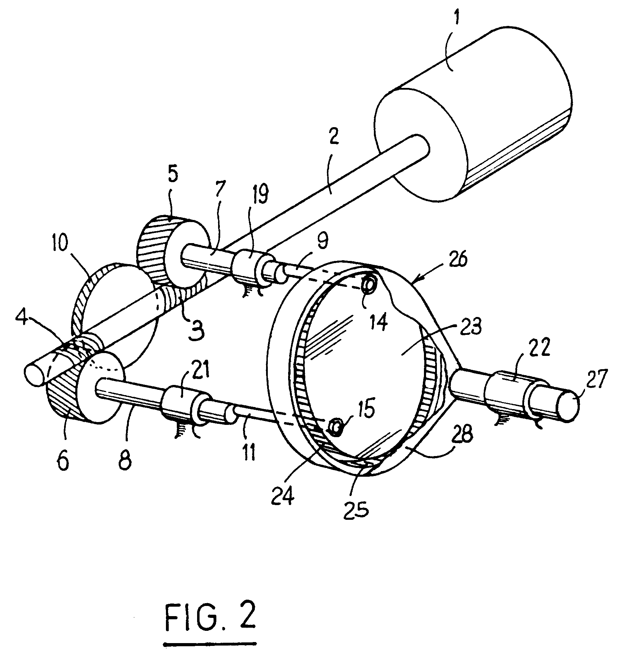

Le second mode de réalisation du motoréducteur visé par l'invention représenté à la Fig.2, diffère du précédent par le tait que les deux manetons 9 et 11 tourillonnent dans des paliers respectifs 14, 15 d'une roue dentée 23, dont la denture 24 coopère avec la denture 25 d'un anneau 26 solidarisé avec l'arbre 27 de sortie. Cette solidarisation est réalisée par exemple au moyen d'un cône rigide 28 dont la base est fixée sur la périphérie de l'anneau 26, et dont le sommet est fixé à une extrémité de l'arbre 27.

Le nombre des dents Z5 de la denture 25 est supérieur au nombre Z6 des dents de la denture 24, de sorte que le rapport de réduction de cet étage devient: -(Z6-Z5)/Z6, les autres caractéristiques du dispositif étant inchangées.

## Revendications

1. Motoréducteur d'entraînement de pièces telles que des accessoires de véhicules automobiles comprenant un moteur (1), caractérisé en ce qu'il comprend :
- un arbre (2) de sortie du moteur entraînant un premier étage de réduction à roues et vis sans fin (3, 4) comportant deux roues dentées (5, 6) entraînées synchrones par les vis,
- un axe (7, 8) fixé à chaque roue dentée, orienté perpendiculairement à l'arbre (2) de sortie du moteur et prolongé par un maneton (9, 11), excentré par rapport à l'axe correspondant (7, 8) de manière à pouvoir exécuter des rotations autour de cet axe,
- un second étage de réduction comportant un élément (12, 23), muni d'une denture (13, 24), lié aux manetons de façon à être entraîné par ceux-ci durant la rotation des manetons suivant une translation circulaire dont le rayon est égal à l'excentration des manetons,
- un organe (16, 26) équipé d'un arbre de sortie (18, 27) pouvant être relié à la pièce à entraîner, portant une denture (17, 25) qui coopère avec celle dudit élément, les nombres de dents des dentures de l'élément et dudit organe étant différents de façon à provoquer une rotation de l'organe (16, 26) de raison déterminée par la différence des nombres de dents des deux dentures.

2. Motoréducteur selon la revendication 1, caractérisé en ce que ledit élément (12) lié aux manetons (9, 11) présente deux paliers (14, 15) dans chacun desquels tourillonne un maneton, et ladite denture (13) est ménagée intérieurement à cet élément, le nombre de dents de cette denture (13) étant supérieur à celui de la denture (17) de l'organe (16) de sortie.

3. Motoréducteur selon la revendication 1, caractérisé en ce que ledit élément lié aux manetons est une roue dentée (23) dans laquelle tourillonnent les manetons (9, 11), et l'organe de sortie est un anneau (26) pourvu d'une denture intérieure (25) entourant ladite roue dentée (23), cet anneau étant solidarisé en rotation avec l'arbre de sortie (27) et sa denture ayant un nombre de dents supérieur à celui de la denture de la roue intérieure associée (23).

4. Motoréducteur selon l'une des revendications 1 à 3, caractérisé en ce qu'il comporte une roue intermédiaire (10) disposée entre les deux roues dentées (5, 6) coopérant avec les vis (3, 4) et engrenant avec lesdites roues, pour assurer leur synchronisme.

5. Motoréducteur selon la revendication 1, caractérisé en ce que l'arbre (2) de sortie du moteur porte deux vis coaxiales (3, 4) décalées axialement et à par de vis opposés, et les deux roues dentées (5, 6) sont placées de part et d'autre de l'arbre en coopérant chacune avec une vis (3, 4).

6. Motoréducteur d'entraînement de pièces telles que des accessoires de véhicules automobiles, confórme à la revendication 1, caractérisé en ce que les manetons (9, 11) portés par chacune des roues dentées sont montés sur des axes parallèles (7, 8) avec le même décalage par rapport à ces axes.

## Claims

1. A gear motor for driving components such as motor vehicle accessories, comprising a motor (1), characterised in that it comprises:
- a motor output shaft (2) driving a first gearing-down stage having wheels and worms (3, 4), comprising two toothed wheels (5, 6) driven synchronously by the worms,
- a spindle (7, 8) fixed to each toothed wheel, arranged perpendicularly to the motor output shaft (2) and extended by a crankpin (9, 11) off-centre relative to the corresponding spindle (7, 8) so as to be able to execute rotations about the said spindle,
- a second gearing-down stage comprising an element (12, 23) provided with toothing (13, 24) and connected to the crankpins so as to be driven by the latter during the rotation of the crankpins on a circular path, the radius of which is equal to the off-centering of the crankpins,
- a member (16, 26) provided with an output shaft (18, 27) connectable to the component to be driven and having toothing (17, 25) co-operating with that of the said element, the number of teeth in the toothings of the element and the said member being different so as to produce rotation of the member (16, 26) in a ratio determined by the difference between the numbers of teeth in the two toothings.

2. A gear motor according to claim 1, characterised in that the said element (12) connected to the crankpins (9, 11) has two bearings (14, 15) in each of which turns a crankpin, and the said toothing (13) is provided inside the said element, the number of teeth in the said toothing (13) being greater than that in the toothing (17) of the output member (16).

3. A gear motor according to claim 1, characterised in that the said element connected to the crankpins is a toothed wheel (23) in which the crankpins (9, 11) turn, and the output member is a ring (26) provided with internal toothing (25) surrounding the said toothed wheel (23), the said ring being rotationally connected to the output shaft (27) and its toothing having a greater number of teeth than the toothing of the associated interior wheel (23).

4. A gear motor according to any one of claims 1 to 3, characterised in that it comprises an intermediate wheel (10) arranged between the two toothed wheels (5, 6), co-operating with the worms (3, 4), and meshing with the said wheels in order to ensure their synchronism.

5. A gear motor according to claim 1, characterised in that the motor output shaft (2) has two co-axial worms (3, 4) axially displaced and having opposing threads, and the two toothed wheels (5, 6) are arranged on either side of the shaft and each co-operate with a worm (3, 4).

6. A gear motor for driving components such as motor vehicle accessories according to claim 1, characterised in that the crankpins (9, 11) carried by each of the toothed wheels are mounted on parallel spindles (7, 8) and have the same displacement relative to the said spindles.

## Patentansprüche

1. Getriebemotor zum Antreiben vom Teilen, wie Kraftfahrzeugzubehörteilen, mit einem Motor (1) dadurch gekennzeichnet, daß er
eine Ausgangswelle (2) des Motors, welche eine erste Untersetzerstufe mit Rädern und Schnecken (3, 4) antreibt die zwei von den Schnecken synchron angetriebene Zahnräder (5, 6) aufweist,
eine Achse (7, 8), die an jedem Zahnrad befestigt ist, senkrecht zur Ausgangswelle (2) des Motors orientiert ist und sich in einem zur entsprechenden Achse (7, 8) exzentrischen Zapfen (9, 11) so fortsetzt, daß dieser Drehungen um diese Achse ausführen kann,
eine zweite Untersetzerstufe mit einem mit einer Verzahnung (13, 24) versehenen Element (12, 23), welches mit den Zapfen so verbunden ist, daß es durch diese bei der Drehung der Zapfen in einer Kreisversetzung mitgenommen wird, deren Radius gleich der Exzentrierung der Zapfen ist,
eine Einrichtung (16, 26), die mit einer Ausgangswelle (18, 27) versehen ist, die mit dem anzutreibenden Teil verbindbar ist, und eine Verzahnung (17, 25) aufweist, die mit derjenigen des Elements zusammenwirkt, wobei die Zahl der Zähne der Verzahnungen des Elements und der Einrichtung unterschiedlich sind, derart, daß eine Drehung der Einrichtung (16, 26) mit einem Verhältnis hervorgerufen wird, das durch die Differenz der Zahl der Zähne der beiden Verzahnungen bestimmt ist, aufweist.

2. Getriebemotor nach Anspruch 1, dadurch gekennzeichnet, daß das mit den Zapfen (9, 11) verbundene Element (12) zwei Lager (14, 15) aufweist, in denen jeweils ein Zapfen als Lagerzapfen rotiert, und die Verzahnung (13) im Inneren dieses Elements ausgebildet ist, wobei die Anzahl der Zähne dieser Verzahnung (13) größer als diejenige der Verzahnung (17) der Ausgangseinrichtung (16) ist.

3. Motorgetriebe nach Anspruch 1, dadurch gekennzeichnet, daß das mit den Zapfen verbundene Element ein Zahnrad (23) ist, in welchem die Zapfen (9, 11) als Lagerzapfen rotieren, und die Ausgangseinrichtung ein Ring (26) ist, der mit einer Innenverzahnung (25) versehen ist, welche das Zahnrad (23) umgibt, wobei dieser Ring mit der Ausgangswelle (27) drehfest verbunden ist und seine Verzahnung eine Anzahl von Zähnen hat, die über derjenigen der Verzahnung des zugehörigen Innenzahnrads (23) liegt.

4. Getriebemotor nach einem der Ansprüche 1 bis 3, dadurch gekennzeichnet, daß er ein Zwischenzahnrad (10) aufweist, welches zwischen den beiden mit der Schnecke (3, 4) zusammenwirkenden Zahnrädern (5, 6) angeordnet ist und mit diesen Zahnrädern zur Gewährleistung von deren Synchronität kämmt.

5. Getriebemotor nach Anspruch 1, dadurch gekennzeichnet, daß die Ausgangswelle (2) des Motors zwei koaxiale Schnecken (3, 4) trägt, die axial versetzt sind und entgegengesetzte Schneckengänge haben, und die beiden Zahnräder (5, 6) beiderseits der Welle, zusammenwirkend mit jeweils einer Schnecke (3, 4), angeordnet sind.

6. Getriebemotor zum Antreiben von Teilen, wie Kraftfahrzeugzubehörteilen, nach Anspruch 1, dadurch gekennzeichnet, daß die Zapfen (9, 11), die von jedem der Zahnräder getragen werden, auf parallelen Achsen (7, 8) mit der gleichen Versetzung in Bezug auf diese Achsen angebracht sind.
